# EUROPÄISCHE PATENTSCHRIFT

(11) **EP 2 659 285 B1**
(45) Veröffentlichungstag und Bekanntmachung des Hinweises auf die Patenterteilung: **17.05.2017**
(21) Anmeldenummer: 11793349.9
(22) Anmeldetag: 07.11.2011
(51) Int. Cl.: G01S 13/93, H01Q 1/32, H01Q 21/08, H01Q 25/00

(54) **RADARSENSOR FÜR KRAFTFAHRZEUGE**
RADAR SENSOR FOR MOTOR VEHICLES
CAPTEUR RADAR POUR VÉHICULES À MOTEUR

(30) Priorität: 29.12.2010 DE 102010064346
(43) Veröffentlichungstag der Anmeldung: 06.11.2013
(73) Patentinhaber: Robert Bosch GmbH, 70442 Stuttgart (DE)
(72) Erfinder: BINZER, Thomas, 74379 Ingersheim (DE); WALDSCHMIDT, Christian, 71272 Renningen (DE); HELLINGER, Raphael, 75181 Pforzheim (DE); STEINBUCH, Dirk, 71299 Wimsheim (DE)
(86) Internationale Anmeldenummer: PCT/EP2011/069511
(87) Internationale Veröffentlichungsnummer: WO 2012/089384

(56) Entgegenhaltungen:
- EP-A1- 1 845 585
- EP-A1- 2 026 099
- WO-A1-2005/073753

## Beschreibung

### Stand der Technik

Die Erfindung betrifft einen Radarsensor für Kraftfahrzeuge, mit einer Sendeantenne in der Form einer planaren Gruppenantenne mit mehreren nebeneinander angeordneten Antennenelementen auf einem gemeinsamen ebenen Substrat, und mit einem Speisenetzwerk und einer Schalteinrichtung zur Zufuhr von Mikrowellenleistung zu den Antennenelementen.

Antennen von Radarsensoren, die für den Einsatz in Kraftfahrzeugen vorgesehen sind, werden häufig als Patchantennen auf einem HF-Substrat ausgeführt. Das erlaubt einen kostengünstigen Aufbau des Radarsensors. Durch Einsatz von Gruppenantennen lässt sich die gewünschte Richtcharakteristik des Radarsensors im Azimut und/oder in der Elevation erreichen, ohne dass eine Radarlinse benötigt wird. Häufig werden getrennte Antennen für die Abstrahlung des Radarsignals und für den Empfang des reflektierten Signals verwendet. Die gewünschte Richtcharakteristik der Sendeantenne im Azimut lässt sich dadurch erreichen, dass den mehreren nebeneinander auf dem Substrat angeordneten Antennenelementen die Mikrowellenleistung phasengleich zugeführt wird. Durch Interferenz entsteht dann eine Radarkeule, deren Hauptabstrahlrichtung rechtwinklig zur Ebene des Substrats orientiert ist und die einen Azimutwinkelbereich von etwa -45° bis etwa +45° abdeckt. Auf der Empfangsseite werden ebenfalls mehrere nebeneinander angeordnete Antennenelemente oder Patches verwendet, die jedoch zu verschiedenen Empfangskanälen gehören, so dass anhand der Phasenunterschiede zwischen den von den verschiedenen Antennenelementen empfangenen Signalen auf den Azimutwinkel des Objekts geschlossen werden kann.

Insbesondere befasst sich die Erfindung mit einer Rückraum-Radarsensorik für Kraftfahrzeuge, beispielsweise in einem LCA-System (Lane Change Aid), das den Fahrer bei einem Spurwechsel unterstützt, indem es vor Fahrzeugen warnt, die sich auf der eigenen Spur oder der Überholspur von hinten annähern. In diesem Fall muss die Radarsensorik in rückwärtiger Richtung eine große Reichweite haben, damit auch schnelle Fahrzeuge rechtzeitig erkannt werden können, und sie muss andererseits in der Lage sein, Fahrzeuge zu orten, die sich in geringem Abstand oder nahezu auf gleicher Höhe auf der Überholspur befinden und somit für den Fahrer im toten Winkel liegen.

Aus EP 1 845 585 A1 ist ein Radarsensor nach dem Oberbegriff des Anspruchs 1 ist bekannt, bei dem eine Hauptkeule im Azimut verschwenkt wird.

EP 2 026 099 A1 beschreibt einen Radarsensor, mit dem in einer Betriebsart eine Funktion BSD (Blind Spot Detection - Tote-Winkel-Erkennung) und in einer anderen Betriebsart eine CTA-Funktion (Cross Traffic Alert) ausgeführt wird.

WO 2005/073753 A1 beschreibt einen Radarsensor, bei dem jedes Antennenelement direkt von einem Ausgang einer Phasensteuerung angesteuert wird.

### Offenbarung der Erfindung

Aufgabe der Erfindung ist es, eine einfach aufgebaute und kostengünstige Radarsensorik zu schaffen, die es erlaubt, eine größere Bandbreite von Funktionen zu erfüllen.

Diese Aufgabe wird erfindungsgemäß mit den in den unabhängigen Ansprüchen angegebenen Merkmalen gelöst.

Durch Interferenz zwischen den von den verschiedenen Antennenelementen abgestrahlten Radarwellen kommt es zur Ausbildung eines asymmetrischen Antennendiagramms, so dass ein großer Teil der Mikrowellenleistung mit hoher Intensität in einer bestimmten Richtung schräg zum Substrat abgestrahlt wird, während ein kleinerer Teil der Mikrowellenleistung unter hohem Azimutwinkel zur entgegengesetzten Seite abgestrahlt wird. Wenn nun der Radarsensor so in das Fahrzeug eingebaut wird, dass das Substrat mit der Längsachse des Fahrzeugs einen Winkel von etwa 45° bildet, so ist es möglich, in einer Betriebsart den Nachfolgeverkehr auf der eigenen Spur und auf der Überholspur, bis in den toten Winkel hinein zu erfassen und die Funktionen LCA und BSD (Blind Spot Detection - Tote-Winkel-Erkennung) zu erfüllen. In der anderen Betriebsart wird ein spiegelbildliches Antennendiagramm erzeugt, das für eine CTA-Funktion (Cross Traffic Alert) genutzt werden kann die den Fahrer z. B. beim Zurücksetzen aus einer Parklücke oder Einfahrt vor Querverkehr warnt.

Ein weiterer Vorteil der Erfindung besteht darin, dass baugleiche Sensoren auf entgegengesetzten Seiten des Fahrzeugs eingebaut werden können, bei denen lediglich die Funktionen der beiden Betriebsarten miteinander vertauscht sind.

Vorteilhafte Ausgestaltungen und Weiterbildungen der Erfindung sind in den Unteransprüchen angegeben.

Bevorzugt bilden die an das Speisenetzwerk angeschlossenen Antennenelemente eine reine Sendeantenne, während zum Empfang des Radarechos eine separate Empfangsantenne vorgesehen ist, die beispielsweise durch eine planare Gruppenantenne gebildet sein kann, die auf demselben Substrat wie die Sendeantenne angeordnet ist.

In einer bevorzugten Ausführungsform sind senderseitig zwei getrennte, parallele Reihen von Antennenelementen vorgesehen, die jeweils durch ein eigenes Speisenetzwerk seriell von entgegengesetzten Seiten her mit Mikrowellenleistung gespeist werden. Die Schalteinrichtung kann dann durch einen Oszillator mit zwei schaltbaren Ausgängen gebildet werden, die permanent mit je einem der beiden Speisenetzwerke verbunden sind. Die beiden Reihen können auf einer Linie angeordnet sein oder auch vertikal versetzt und einander überlappend, so dass sie sich auf einem kompakten Substrat unterbringen lassen. Die den Antennenelementen zugeführte Leistung kann je nach Betriebsart variieren. Beispielsweise ist es zweckmäßig, die Antennenelemente für die CTA-Funktion mit einer niedrigeren Amplitude zu beaufschlagen, so dass die zur Seite gerichtete Hauptkeule für die CTA-Funktion eine geringere Reichweite hat und damit störungsunempfindlicher ist als die nach hinten gerichtete Hauptkeule für die LCA-Funktion.

Der Abstand zwischen zwei benachbarten Antennenelementen jeder Reihe kann beispielsweise eine halbe Wellenlänge betragen, und die Phasenverschiebung kann sich von Antennenelement zu Antennenelement um je 120° ändern. Auf diese Weise erreicht man eine Hauptkeule, die mit der Normalen zu dem Substrat einen Winkel von etwa 35° bildet. Die Hauptkeule ist dann in beiden Betriebsarten so zur Längsachse bzw. zur Querachse des Fahrzeugs ausgerichtet, dass der Sensor in der CTA-Betriebsart nach hinten relativ unempfindlich ist, so dass die Funktion nicht durch Clutter von direkt hinter dem Fahrzeug parkenden Fahrzeugen gestört wird. Entsprechend ist der Sensor in der LCA-Betriebsart relativ unempfindlich gegenüber überholenden oder überholten Fahrzeugen, die sich in größerem Abstand auf gleicher Höhe mit dem eigenen Fahrzeug befinden.

Bevorzugt ist das Speisenetzwerk so ausgebildet, dass auch die Amplitude der emittierten Mikrowellen von Antennenelement zu Antennenelement variiert, beispielsweise von einem Ende der Reihe der Antennenelemente zum entgegengesetzten Ende hin abnimmt. Dadurch wird die Leistungsverteilung der emittierten Radarstrahlung über den Azimutwinkel vergleichmäßigt, so dass Ortungslücken zwischen der Hauptkeule und den Nebenkeulen weitgehend geschlossen werden.

Im folgenden wird ein Ausführungsbeispiel der Erfindung anhand der Zeichnung näher erläutert.

Es zeigen:
- Fig. 1: eine schematische Darstellung mehrerer in zwei horizontalen Reihen auf einem Substrat angeordneter Antennenelemente, mit Angabe eines Beispiels für die Phasenbelegung der einzelnen Antennenelemente;
- Fig. 2 und 3: Antennendiagramme für die Antennenanordnung und die Phasenbelegung gemäß Fig. 1;
- Fig. 4: einen schematischen Grundriss eines Kraftfahrzeugs, zur Illustration der Einbauweise von Radarsensoren gemäß der Erfindung; und
- Fig. 5 und 6: Ortungsdiagramme eines Radarsensors gemäß der Erfindung in unterschiedlichen Anwendungssituationen.

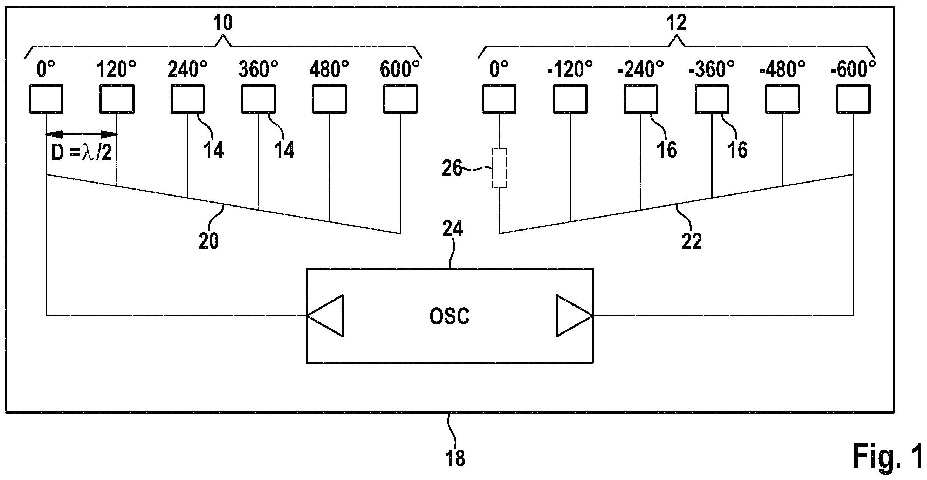

In Fig. 1 sind zwei waagerechte Reihen 10, 12 mit je sechs Antennenelementen 14, 16 gezeigt, die in innerhalb jeder Reihe gleichmäßigen Abständen auf einem HF-Substrat 18 angeordnet sind. Die Antennenelemente 14, 16 sind hier als einzelne Patches dargestellt. Über jeweilige Speisenetzwerke 20, 22 erhalten die Antennenelemente ein Mikrowellensignal, das dann als Radarstrahlung abgestrahlt werden soll. Die beiden Speisenetzwerke 20, 22 sind an verschiedene Ausgänge eines schaltbaren Oszillators 24 angeschlossen, der das zu sendende Mikrowellensignal erzeugt. Die beiden Ausgänge des Oszillators 24 lassen sich unabhängig voneinander ein- und ausschalten, und auch die Amplitude des Mikrowellensignals lässt sich für jeden Ausgang unabhängig einstellen.

Die Speisenetzwerke 20, 22 sind so ausgebildet, dass die Antennenelemente 14, 16 jeder Reihe seriell gespeist werden, wobei jedoch die Einspeiserichtungen für die beiden Reihen 10 und 12 spiegelbildlich sind.

Der Mittenabstand D der Antennenelemente 14, 16 jeder Reihe beträgt im gezeigten Beispiel eine halbe Wellenlänge der Mikrowellenstrahlung (D = λ/2). Die Länge der Abschnitte der Speisenetzwerke 20, 22, die zwei benachbarte Antennenelemente miteinander verbinden, bestimmt die Phasendifferenz zwischen diesen Antennenelementen. Ein Beispiel für die Phasenbelegung der Antennenelemente 14, 16 ist in Fig. 1 angegeben. In der Reihe 10 haben die Antennenelemente 14 in Bezug auf das erste Antennenelement am linken Ende der Reihe (Phase = 0°) Phasenverschiebungen von 120°, 240°, 360°, 480° und 600°. Die Phasenverschiebung nimmt also mit gleichen Inkrementen (120°) zu. In der Reihe 12 haben die Anatennenelemente 16 in Bezug auf das letzte Antennenelement am linken Ende der Reihe (Phase = 0°) Phasenverschiebungen von -120°, -240°, -360°, -480° und -600°.

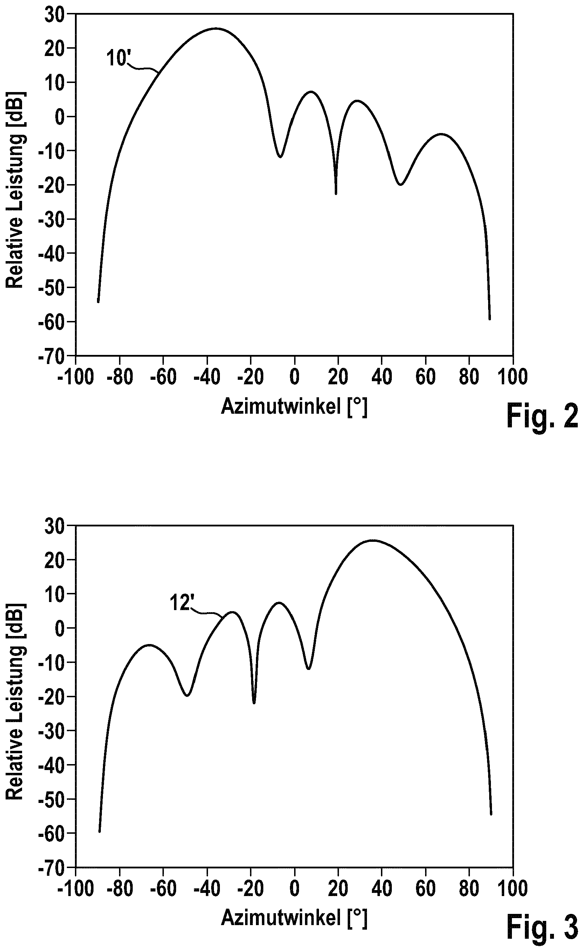

Fig. 2 und 3 zeigen Antennendiagramme, die sich mit der in Fig. 1 gezeigten Phasenbelegung für die Reihe 10 bzw. 12 ergeben. Die Kurve 10' in Fig. 2 gibt die relative Leistung der von den Antennenelementen 14 der Reihe 10 emittierten Radarstrahlung als Funktion des Azimutwinkels an. Durch Interferenz zwischen den von den einzelnen Antennenelementen emittierten Strahlungsanteilen kommt es zu einem ausgeprägten Maximum bei einem Azimutwinkel von etwa -35°. Für (dem Betrage nach) größere Azimutwinkel fällt die Leistung ab. Im Bereich von -20° bis +70°gibt es dagegen einige Nebenmaxima, so dass die Leistung bis in den Bereich von etwa +80° auf einem mäßig hohem Niveau bleibt. Die Kurve 12' in Fig. 3 ist spiegelbildlich zu der Kurve 10' und gibt die relative Leistung der von den Antennenelementen 16 der Reihe 12 emittierten Radarstrahlung als Funktion des Azimutwinkels an.

Mit Hilfe von sogenannten Transformatoren 26 (in Fig. 1 nur gestrichelt angedeutet) in den Speisenetzwerken 20, 22 lässt sich Amplitudenbelegung für jedes Antennenelement 14, 16 individuell einstellen. Dadurch lässt sich erreichen, dass die Minima in den Antennendiagrammen relativ schwach ausgeprägt sind.

Die Reihen 10, 12 der Antennenelemente 14, 16 bilden jeweils eine Sendeantenne. Weitere nicht gezeigte Antennenelemente auf dem Substrat 18 bilden eine (vorzugweise winkelauflösende) Empfangsantenne zum Empfang der Radarechos.

Die Antennenelemente der Sendeantennen und der Empfangsantenne sowie die Speisenetzwerke 20, 22 können in Mikrostreifentechnik auf dem Substrat 18 gebildet sein, das auch den Oszillator 24 sowie ggf. weitere Komponenten des Radarsensors wie z. B. Mischer und dgl. aufnimmt.

Anstelle der einzelnen Antennenelemente 14, 16 können wahlweise auch vertikal orientierte Antennenspalten vorgesehen sein, die jeweils mehrere seriell gespeiste Antennenpatches umfassen.

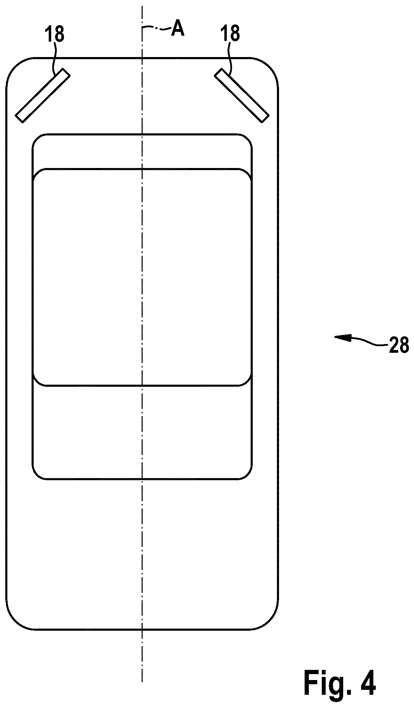

Fig. 4 illustriert den Einbau von Radarsensoren mit der oben beschriebenen Antennenanordnung in einem Kraftfahrzeug 28. Von den Radarsensoren sind hier nur die Grundrisse der plattenförmigen, vertikal orientierten Substrate 18 schematisch dargestellt. Man erkennt, dass in jeder hinteren Ecke des Kraftfahrzeugs 28 ein Radarsensor so angeordnet ist, dass sein Substrat 18 mit der Längsachse A des Fahrzeugs einen Winkel von 45° bildet.

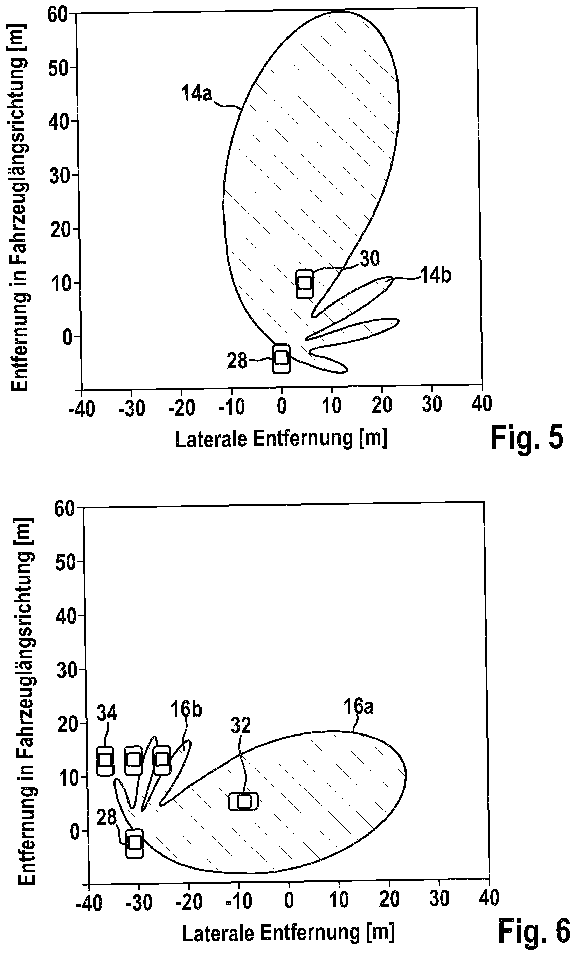

Fig. 5 zeigt ein Ortungsdiagramm des Radarsensors, der sich auf der in Fahrtrichtung linken Seite des Fahrzeugs 28 befindet. Die schraffierte Fläche in Fig. 5 gibt den Bereich an, in dem die Radarstrahlung eine für die Ortung von Objekten ausreichende Amplitude hat, wenn das Mikrowellensignal des Oszillators 24 in einer LCA-Betriebsartin die Reihe 10 der Antennenelemente 14 eingespeist wird. Es ergibt sich eine sehr ausgeprägte, im wesentlichen nach hinten gerichtete Hauptkeule 14a, die mit der Längsachse des Fahrzeugs einen Winkel von etwa 15° bildet und somit besonders dazu geeignet ist, überholende Fahrzeuge 30 auf der linken Nebenspur zu orten, ebenso Fahrzeuge, die sich auf der Spur des eigenen Fahrzeugs 28 mit hoher Geschwindigkeit annähern. Kleinere Nebenkeulen 14b sind stärker zur Seite des Fahrzeugs gerichtet und erlauben insbesondere die Ortung von Fahrzeugen, die sich für den Fahrer im toten Winkel befinden. Die Reichweite ist dabei jedoch so begrenzt, dass störende Ortungssignale von Fahrzeugen auf der übernächsten Spur oder auf der Gegenfahrbahn weitgehend unterdrückt werden.

Fig. 6 zeigt ein Ortungsdiagramm für den Betrieb desselben Radarsensors des Fahrzeugs 28 im Rahmen einer CTA-Funktion, mit der, beispielsweise beim Zurücksetzen aus einer Parklücke, der Fahrer vor Querverkehr in der Parkgasse gewarnt werden kann. Der Querverkehr wird in Fig. 6 durch ein Fahrzeug 32 repräsentiert. In diesem Fall ist die Reihe 10 der Antennenelemente abgeschaltet, und die Leistung des Oszillators 24 wird in die Reihe 12 der Antennenelemente 16 eingespeist, vorzugsweise mit etwas geringerer Leistung als in der LCA-Betriebsart gemäß Fig. 5. Wie Fig. 6 zeigt, ergibt sich in diesem Fall eine Hauptkeule 16A mit etwas geringerer Reichweite, die im wesentlichen zur Seite des Fahrzeugs 28 gerichtet ist und mit der Längsachse des Fahrzeugs 28 einen Winkel von etwa 75° bildet. Nebenkeulen 16b mit kurzer Reichweite sind in diesem Fall im wesentlichen nach hinten gerichtet. Durch die Begrenzung der Reichweite dieser Nebenkeulen wird in dieser Betriebsart unerwünschter Clutter von Fahrzeugen 34 vermieden, die hinter dem eigenen Fahrzeug 28 parken.

## Patentansprüche

1. Radarsensor für Kraftfahrzeuge (28), mit einer Sendeantenne in der Form einer planaren Gruppenantenne mit mehreren nebeneinander angeordneten Antennenelementen (14, 16) auf einem gemeinsamen ebenen Substrat (18), und mit einem Speisenetzwerk (20, 22) und einer Schalteinrichtung (24) zur Zufuhr von Mikrowellenleistung zu den Antennenelementen, wobei die Antennenelemente (14, 16) mit gleichen Abständen in einer Reihe (10, 12) angeordnet sind, das Speisenetzwerk (20, 22) dazu ausgebildet ist, den Antennenelementen die Mikrowellenleistung seriell mit einer von einem Ende der Reihe zum anderen zunehmenden Phasenverschiebung zuzuführen, und die Schalteinrichtung (24) dazu ausgebildet ist, die Zufuhr der Mikrowellenleistung zu den Antennenelementen (14, 16) derart zu steuern, dass sie in einer ersten Betriebsart von einem Ende der Reihe her erfolgt und in einer zweiten Betriebsart spiegelbildlich vom entgegengesetzten Ende der Reihe (10, 12) her erfolgt, **dadurch gekennzeichnet, dass** das Speisenetzwerk (20, 22) dazu ausgebildet ist, den Antennenelementen die Mikrowellenleistung mit einer mit konstanten Inkrementen zunehmenden Phasenverschiebung zuzuführen, so dass die Antennenelemente eine Hauptkeule (14a) und mehrere asymmetrisch auf einer Seite der Hauptkeule liegende Nebenkeulen (14b) erzeugen, um die verschiedenen Betriebsarten zu gewährleisten.

2. Radarsensor für Kraftfahrzeuge (28), mit einer Sendeantenne in der Form einer planaren Gruppenantenne mit mehreren nebeneinander angeordneten Antennenelementen (14, 16) auf einem gemeinsamen ebenen Substrat (18), und mit einem Speisenetzwerk (20, 22) und einer Schalteinrichtung (24) zur Zufuhr von Mikrowellenleistung zu den Antennenelementen, **dadurch gekennzeichnet, dass** die Antennenelemente (14, 16) mit gleichen Abständen in zwei Reihen (10, 12) angeordnet sind, jeder Reihe ein eigenes Speisenetzwerk (20, 22) zugeordnet ist, das dazu ausgebildet ist, den Antennenelementen die Mikrowellenleistung seriell mit einer mit konstanten Inkrementen von einem Ende der Reihe zum anderen zunehmenden Phasenverschiebung zuzuführen, so dass die Antennenelemente eine Hauptkeule (14a) und mehrere asymmetrisch auf einer Seite der Hauptkeule liegende Nebenkeulen (14b) erzeugen, um zwei verschiedenen Betriebsarten zu gewährleisten, und dass die Schalteinrichtung (24) dazu ausgebildet ist, die Zufuhr der Mikrowellenleistung zu den Antennenelementen (14, 16) derart zu steuern, dass sie in der ersten Betriebsart von einem Ende einer Reihe (10) her in diese eine Reihe (10) erfolgt und in der zweiten Betriebsart spiegelbildlich mit entgegengesetzter Einspeisungsrichtung in die andere Reihe (12) erfolgt.

3. Radarsensor nach Anspruch 2, bei dem die Schalteinrichtung durch einen Oszillator (24) mit zwei unabhängig voneinander schaltbaren Ausgängen gebildet wird, an das je eines der Speisenetzwerke (20, 22) permanent angeschlossen ist.

4. Radarsensor nach einem der vorstehenden Ansprüche, bei dem der Abstand zwischen benachbarten Antennenelementen (14, 16) innerhalb jeder Reihe (10, 12) eine halbe Wellenlänge der emittierten Mikrowellenstrahlung beträgt.

5. Radarsensor nach einem der vorstehenden Ansprüche, bei dem das konstante Inkrement der Phasenverschiebung 120° beträgt.

6. Kraftfahrzeug mit einem Radarsensor nach einem der vorstehenden Ansprüche, dessen Substrat (18) mit der Längsachse (A) des Fahrzeugs (28) in der waagerechten Ebene einen Winkel von 45° bildet.

7. Kraftfahrzeug nach Anspruch 6, bei dem zwei baugleiche Radarsensoren spiegelbildlich zueinander auf entgegengesetzten Seiten des Fahrzeugs (28) angeordnet sind.

8. Fahrerassistenzsystem für Kraftfahrzeuge, mit einer Spurwechselassistenzfunktion LCA zur Ortung von Fahrzeugen (30) auf der eigenen Spur oder einer Nebenspur im Rückraum des eigenen Fahrzeugs (28), und mit einer Querverkehr-Warnfunktion CTA zur Ortung von Fahrzeugen (32), die sich quer zur Längsachse (A) des eigenen Fahrzeugs (28) bewegen, **gekennzeichnet durch** einen Radarsensor nach einem der Ansprüche 1 bis 5, dessen Betriebsweise mittels der Schalteinrichtung (24) in Abhängigkeit von der gewünschten Assistenzfunktion wählbar ist.

## Claims

1. Radar sensor for motor vehicles (28), having a transmission antenna in the form of a planar group antenna having multiple antenna elements (14, 16) arranged next to one another on a common planar substrate (18), and having a supply network (20, 22) and a switching device (24) for supplying microwave power to the antenna elements, wherein the antenna elements (14, 16) are arranged with equal spacings in a row (10, 12), the supply network (20, 22) is designed to supply the antenna elements with the microwave power serially with a phase shift increasing from one end of the row to the other, and the switching device (24) is designed to control the supply of the microwave power to the antenna elements (14, 16) such that it takes place from one end of the row in a first mode of operation and takes place from the opposite end of the row (10, 12), in mirror-image fashion, in a second mode of operation, **characterized in that** the supply network (20, 22) is designed to supply the antenna elements with the microwave power with a phase shift increasing with constant increments, so that the antenna elements produce a main lobe (14a) and multiple side lobes (14b), situated asymmetrically on one side of the main lobe, in order to ensure the different modes of operation.

2. Radar sensor for motor vehicles (28), having a transmission antenna in the form of a planar group antenna having multiple antenna elements (14, 16) arranged next to one another on a common planar substrate (18), and having a supply network (20, 22) and a switching device (24) for supplying microwave power to the antenna elements, **characterized in that** the antenna elements (14, 16) are arranged with equal spacings in two rows (10, 12), each row has an associated supply network (20, 22) of its own that is designed to supply the antenna elements with the microwave power serially with a phase shift increasing with constant increments from one end of the row to the other, so that the antenna elements produce a main lobe (14a) and multiple side lobes (14b), situated asymmetrically on one side of the main lobe, in order to ensure two different modes of operation, and **in that** the switching device (24) is designed to control the supply of the microwave power to the antenna elements (14, 16) such that it takes place from one end of a row (10) into said one row (10) in the first mode of operation and takes place in the opposite supply direction into the other row (12), in mirror-image fashion, in the second mode of operation.

3. Radar sensor according to Claim 2, in which the switching device is formed by an oscillator (24) having two outputs that are switchable independently of one another, to each of which one of the supply networks (20, 22) is permanently connected.

4. Radar sensor according to one of the preceding claims, in which the spacing between adjacent antenna elements (14, 16) within each row (10, 12) is one half-wavelength of the emitted microwave radiation.

5. Radar sensor according to one of the preceding claims, in which the constant increment of the phase shift is 120°.

6. Motor vehicle having a radar sensor according to one of the preceding claims, the substrate (18) of which radar sensor forms an angle of 45° with the longitudinal axis (A) of the vehicle (28) in the horizontal plane.

7. Motor vehicle according to Claim 6, in which two radar sensors of the same design are arranged on opposite sides of the vehicle (28) in mirror-image fashion relative to one another.

8. Driver assistance system for motor vehicles, having a lane change assistance function LCA for locating vehicles (30) in its own lane or an adjacent lane in the rear space of its own vehicle (28), and having a cross traffic alert function CTA for locating vehicles (32) that move transversely with respect to the longitudinal axis (A) of its own vehicle (28), **characterized by** a radar sensor according to one of Claims 1 to 5, the manner of operation of which radar sensor is selectable by means of the switching device (24) on the basis of the desired assistance function.

## Revendications

1. Capteur radar pour véhicules automobiles (28), comportant une antenne d'émission sous la forme d'une antenne réseau planaire ayant une pluralité d'éléments d'antenne (14, 16) juxtaposés sur un substrat plan commun (18), et comportant un réseau d'alimentation (20, 22) et un dispositif de commutation (24) servant à acheminer une puissance hyperfréquence aux éléments d'antenne, dans lequel les éléments d'antenne (14, 16) sont agencés à des distances égales sur une rangée (10, 12), dans lequel le réseau d'alimentation (20, 22) est conçu pour acheminer la puissance hyperfréquence aux éléments d'antenne en série avec un décalage de phase augmentant d'une extrémité de la rangée à l'autre, et dans lequel le dispositif de commutation (24) est conçu pour commander l'acheminement de la puissance hyperfréquence aux éléments d'antenne (14, 16) de manière à ce que celui-ci s'effectue dans un premier mode de fonctionnement à partir d'une extrémité de la rangée et à ce qu'il s'effectue dans un deuxième mode de fonctionnement de manière symétrique dans un miroir à partir de l'extrémité opposée de la rangée (10, 12), **caractérisé en ce que** le réseau d'alimentation (20, 22) est conçu pour acheminer la puissance hyperfréquence aux éléments d'antenne avec un décalage de phase augmentant avec des incréments constants de manière à ce que les éléments d'antenne génèrent un lobe principal (14a) et plusieurs lobes secondaires (14b) situés de manière asymétrique sur un côté du lobe principal, afin de garantir les différents modes de fonctionnement.

2. Capteur radar pour véhicules automobiles (28), comportant une antenne d'émission sous la forme d'une antenne réseau planaire ayant une pluralité d'éléments d'antenne (14, 16) juxtaposés sur un substrat plan commun (18), et comportant un réseau d'alimentation (20, 22) et un dispositif de commutation (24) servant à acheminer une puissance hyperfréquence aux éléments d'antenne, **caractérisé en ce que** les éléments d'antenne (14, 16) sont agencés à des distances égales sur deux rangées (10, 12), **en ce qu'**à chaque rangée est associé un réseau d'alimentation (20, 22) qui lui est propre, conçu pour acheminer la puissance hyperfréquence aux éléments d'antenne en série avec un décalage de phase augmentant d'une extrémité de la rangée à l'autre, de manière à ce que les éléments d'antenne génèrent un lobe principal (14a) et plusieurs lobes secondaires (14b) situés sur un côté du lobe principal, afin de garantir deux modes de fonctionnement différents, et **en ce que** le dispositif de commutation (24) est conçu pour commander l'acheminement de la puissance hyperfréquence aux éléments d'antenne (14, 16) de manière à ce que celui-ci s'effectue dans le premier mode de fonctionnement à partir d'une extrémité d'une rangée (10) dans ladite une rangée (10) et à ce que celui-ci s'effectue dans le deuxième mode de fonctionnement de manière symétrique dans un miroir au moyen d'un dispositif d'alimentation opposé dans l'autre rangé (12).

3. Capteur radar selon la revendication 2, dans lequel le dispositif de commutation est constitué d'un oscillateur (24) ayant deux sorties pouvant être commutées indépendamment l'une de l'autre, auquel l'un des réseaux d'alimentation (20, 22) est respectivement connecté de manière permanente.

4. Capteur radar selon l'une quelconque des revendications précédentes, dans lequel la distance entre des éléments d'antenne (14, 16) adjacents à l'intérieur de chaque rangée (10, 12) est égale à la moitié d'une longueur d'onde du rayonnement hyperfréquence émis.

5. Capteur radar selon l'une quelconque des revendications précédentes, dans lequel l'incrément constant du décalage de phase est de 120°.

6. Véhicule automobile comportant un capteur radar selon l'une quelconque des revendications précédentes, dont le substrat (18) forme un angle de 45° dans le plan horizontal avec l'axe longitudinal (A) du véhicule (28).

7. Véhicule automobile selon la revendication 6, dans lequel il est prévu deux capteurs radars disposés de manière symétrique dans un miroir l'un par rapport à l'autre sur des côtés opposés du véhicule (28).

8. Système d'assistance à la conduite pour véhicules automobiles, comportant une fonction d'assistance au changement de voie LCA destinée à localiser des véhicules (30) sur la voie concernée ou sur une voie adjacente dans l'espace arrière du véhicule (28) concerné, et comportant une fonction d'alarme de trafic transversal CTA destinée à localiser des véhicules (32) qui se déplacent transversalement à l'axe longitudinal (A) du véhicule (28) concerné, **caractérisé par** un capteur radar selon l'une quelconque des revendications 1 à 5, dont le mode de fonctionnement peut être sélectionné au moyen du dispositif de commutation (24) d'une manière qui dépend de la fonction d'assistance souhaitée.
